# EUROPEAN PATENT SPECIFICATION

(11) **EP 0 801 629 B1**
(45) Date of publication and mention of the grant of the patent: **29.03.2000**
(21) Application number: 96900148.6
(22) Date of filing: 12.01.1996
(51) Int. Cl.: B65G 59/06

(54) **APPARATUS AND METHOD FOR REMOVING ARTICLES FROM A STACK**
VORRICHTUNG UND VERFAHREN UM GEGENSTÄNDE AUS EINEM STAPEL ZU ENTNEHMEN
DISPOSITIF ET PROCEDE PERMETTANT D'ENLEVER DES ARTICLES D'UNE PILE

(30) Priority: 14.01.1995 GB 9500714
(43) Date of publication of application: 22.10.1997
(73) Proprietor: APV UK Limited, London SW1P 1BX (GB)
(72) Inventor: MOYSES, Thomas, Bretton, Peterborough PE3 8LB (GB)
(74) Representative: Lomas, Geoffrey Michael
(86) International application number: GB9600056
(87) International publication number: WO9621612

(56) References cited:
- GB-A- 2 216 508
- US-A- 2 198 036
- US-A- 2 910 211

## Description

The present invention relates to apparatus and a method for removing articles from a stack, and is concerned particularly, although not exclusively, with apparatus and a method for removing delicate or friable articles, such as biscuits, from a stack.

When manufacturing biscuits it is often necessary to transfer the biscuits from a substantially vertical stack to a substantially horizontal conveyor. This operation is commonly known as de-stacking. When automating a de-stacking operation in the production of biscuits or similarly delicate articles, care must be taken when designing the handling devices to ensure that the biscuits are not damaged. Typically, damage may be caused due to the rapid stop-start of the biscuits within the stack as they are moved downwards during the de-stacking process. At high operational speed this manifests itself as a vertical vibration of the stack. This is particularly noticeable in equipment suitable for high volume production of biscuits and commonly results in a crumbling or cracking of the biscuits.

One known prior art device which attempts to address this problem is described in GB-A-2 216 508, which is acknowledged in the precharacterising portion of claim 1 of the present application. This device uses a toothed wheel to remove, one at a time, articles from the bottom of a stack. However, the vertical downward movement of the stack is not at a constant speed and therefore vibration of the stack is not eliminated.

Another prior art device attempting to address the problem is US-A-2 910 211. However, the device of this reference is completely unsuitable for use in removing fragile planar articles, such as biscuits, from a stack of the same.

However, in the case of this reference, relatively large articles (containers) are conveyed in a series of downward steps of roughly the same amount, rather like being conveyed by a "moving staircase" or escalator.

On the other hand, the present invention provides a much smoother conveying path, particularly suitable for transporting biscuits.

According to a first aspect of the present invention, apparatus for removing planar articles from a stack comprises conveying means and a number of projections located on the conveying means, each projection comprising a leading edge which is substantially transverse to the extent of the conveying means and a trailing edge which tapers towards the conveying means; said conveying means being adapted to be located in use substantially below a stack of articles in stack retaining means, characterised in that the portion of the conveying means directly below the stack of articles is angled downwardly with respect to the stack of articles; that in use the conveying means is arranged to convey a lowermost article in the stack downwardly with respect to the stack retaining means, and the stack of articles descends at a constant speed relative to the speed of the conveying means.

Preferably, in use, the downward motion of the stack is continuous.

Preferably, the arrangement is such that in use the stack of articles maintains a downward motion with respect to the stack retaining means.

Preferably, the conveying means comprises an endless belt or track, which may be driven by a pulley.

Preferably, the portion of the conveying means directly below the stack is arranged to travel downwardly with respect to the stack in the direction of travel of the conveying means.

Said portion of the conveying means is preferably substantially flat.

The angle between the said portion of the conveying means and the horizontal extent of the stack is preferably such that a lower most article of the stack is removed and travels downwardly with respect to the stack retaining means by a distance substantially equal to the thickness of an article.

Preferably, the trailing edge of the projection is arranged, in use, to support the next lower most article in the stack.

In use, the articles are preferably urged onto guide means arranged to guide the motion of the articles away from the stack.

There may be provided additional urging means to urge the articles onto the guide means. The urging means may comprise one or more pin members, which pin members may be driven by a chain and sprocket type drive.

The guide means may comprise a number of wires arranged to support articles from below.

Alternatively or additionally, the or each article may in use be inverted after removal from the stack, by co-operation of the articles with a retaining member, which retaining member extends partly around a pulley of the conveying means, and is spaced from the conveying means.

Preferably the or each article is supported by one or more support members which are fixed relative to the pulley, to support the or each article as it travels around the pulley.

The support members may comprise projections fixed to the pulley. The fixed projections may be attached to or integral with a plate mounted on the side of the pulley, such that the fixed projections extend radially outward with respect to the pulley.

Preferably, there are provided two plates located either side of the pulley of the conveying means, or if two conveying means are used, each having its respective pulley, the pulleys may each have a plate, such that the conveying means extend between the plates.

Preferably, the fixed projections are spaced apart by an extent substantially equal to the spacing of the articles on the conveying means.

In a preferred arrangement, two conveying means are provided below the stack of articles, such that each conveying means supports the lower most article as it is removed from the stack, there being one conveying means located substantially either side of a centre of a lower most article.

Preferably, the motion of the two conveying means is synchronised, such that in use projections on the two conveying means arrive at the lower most article at substantially the same time.

There may be provided a conveyor support means arranged, in use, to support at least the portion of the conveying means directly below the stack, such that the said portion of the conveying means extends at an angle below horizontal.

The conveyor support means may be adjustable such that the angle below the horizontal at which the said portion of the conveying means extends in use may be adjusted.

Preferably, the conveyor support means is adjustable pivotally with respect to a pulley of the conveying means.

The invention also includes a method of removing planar articles from a stack in a stack retaining means, the method comprising conveying the lowermost article of the stack away from the stack on conveying means, characterised in that the conveying means is arranged to convey the lowermost article in the stack downwardly with respect to the stack retaining means until the said article is conveyed beyond a horizontal extent of the stack and to descend the stack of articles at a constant speed relative to the speed of the conveying means.

Preferably the vertical downward movement of the stack is continuous.

The apparatus may be carried into practice in various ways, but an embodiment will now be described by way of example only with reference to the accompanying diagrammatic drawings in which:
Figure 1 shows an embodiment of apparatus for the removal of articles from a stack;
Figures 2a to 2d show in more detail the stages of removal of an article from the stack shown in Figure 1;
Figure 3 shows an alternative embodiment of apparatus arranged to remove articles from a stack; and
Figure 4 shows a still further embodiment of apparatus arranged to remove articles from a stack.

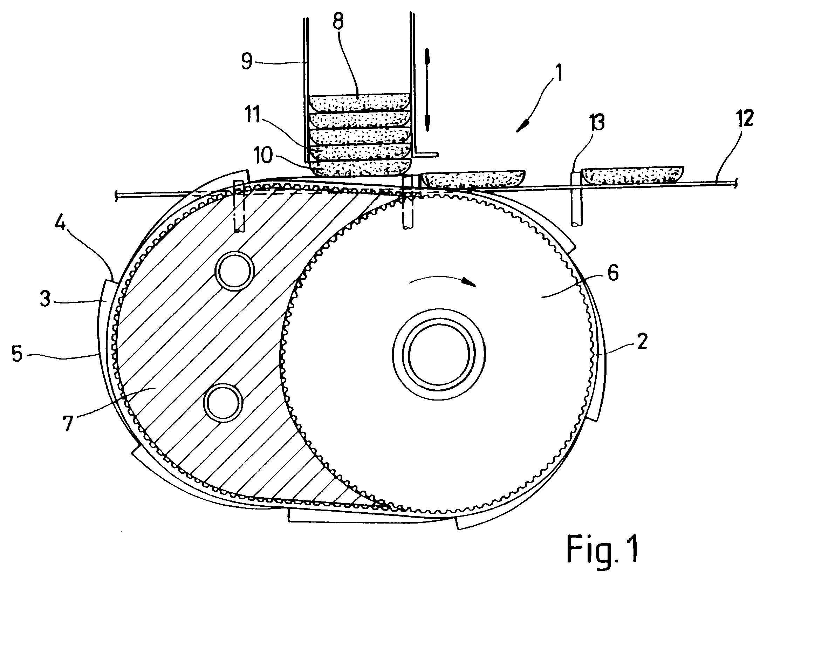

Referring to Figure 1, a de-stacking unit shown generally at 1 has a conveyor belt 2 on which are mounted projections 3. Each of the projections 3 comprises a blade member having a leading edge 4 which is substantially normal to the surface of the belt 2, and a trailing support edge 5. The belt 2 is driven by a pulley or wheel 6 and the belt 2 is arranged to extend around a nylon support 7 positioned to the side of the pulley 6. The support, commonly referred to as a follower, is pivotally mounted about the centre of the drive pulley 6. The de-stacker unit 1 is positioned below a substantially vertical stack of biscuits 8 held in a magazine 9. The position of the drive pulley 6 is arranged such that clockwise rotation of the pulley 6 results in a left to right movement of the portion of the belt 2 beneath the magazine 9. The support 7 is mounted relative to the pulley 6 such that the portion of the belt 2 directly below the stack 8 of biscuits is angled downwardly with respect to the stack 8. In addition, the profile of the support 7 is such that the portion of the belt 2 directly below the stack 8 of biscuits is substantially flat.

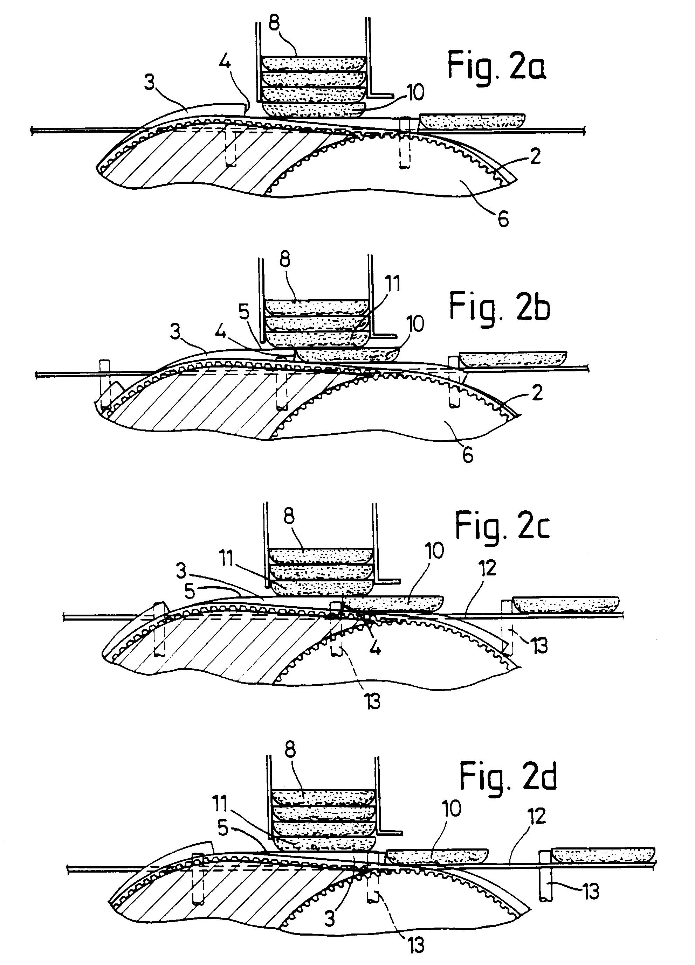

Turning to Figures 2a to 2d, in Figure 2a the leading edge 4 of the projection 3 approaches the lowermost biscuit 10 of the stack of biscuits as the pulley 6 drives the belt beneath the stack 8. In Figure 2b the leading edge 4 of the projection 3 has contacted biscuit 10 which begins to move to the right. In addition, because the belt 2 is angled downwardly at this point with respect to the stack 8 the biscuit 10 is made to move progressively downwards and to the right of the stack. In Figure 2b, it can be seen that the next lower most biscuit 11 is supported at this point both by the previous biscuit 10 and the trailing support surface 5 of the projection 3.

In Figure 2c, the biscuit 10 is almost beyond the horizontal extent of the stack 8 and the next lower most biscuit 11 is almost completely supported on the trailing support surface 5 of the projection 3. At this point, the biscuit 10 is being supported on parallel guide wires 12 and is urged onto the guide wires 12 by pins 13 which are driven in synchronised position with the leading edge 4 of the projections 3 by an endless sprocket and chain.

In Figure 2d it can be seen that biscuit 10 is completely supported on the wires 12 and biscuit 11 is entirely supported on the trailing surface 5 of the projection 3.

From the sequence shown in Figures 2a to 2d, it can be seen that the leading edge 4 of the projection 3 moves to abut the lower most biscuit 10 in the stack and push the biscuit 10 from beneath the stack. As the lower most biscuit 10 is removed the support surface 5 of the projection 3 moves under the next biscuit 11 in the stack and supports the stack of biscuits progressively across the whole width of the biscuit. Due to the below-horizontal angle of the belt 2 as it travels beneath the magazine, the lower most biscuit and the biscuit stack descend at a constant speed relative to the speed of the belt. When the bottom biscuit has cleared the right hand edge of the magazine it is supported by the two wires 12, pins 13 being in synchronised position with the leading edge 4 of the projections 3 to push the biscuit along the support wires 12. At this point, the vertical edge 4 of the following projection 3 is brought to abut the next biscuit 11 in the stack and the procedure is repeated.

The downward speed of the stack is determined by the angle of the belt below horizontal for any given belt speed. Thus various sizes and thicknesses of biscuit can be accommodated by varying the spacing between the projections on the belt and both the angle and speed of the belt. The range of biscuits that can be accommodated by one belt will primarily be determined by the height of the leading edge of the projections which must be no greater than the thickness of the biscuit and is preferably substantially the same as the thickness of the biscuit.

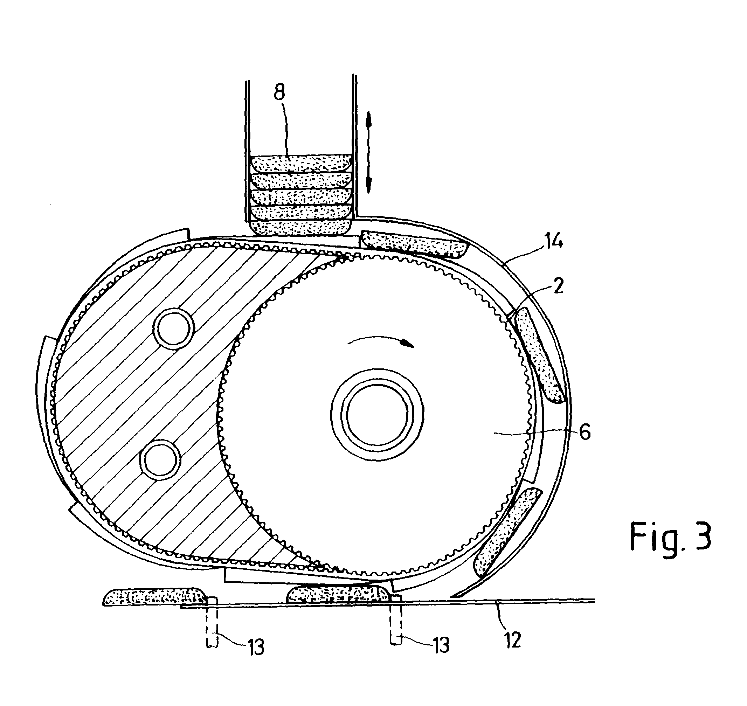

Turning now to Figure 3, this shows an alternative embodiment of apparatus to remove articles from a stack in which the biscuits are inverted after removal from the stack, i.e. to present the underside of the biscuits in the stack as the upperside for the next stage in a production process. In this embodiment an arcuate retaining member 14 is provided adjacent to the surface of the belt 2 which follows the belt 2 around the drive pulley 6 in order to retain the biscuits on the surface of the belt 2 as they travel around the pulley 6. The inverted biscuits are then presented to guide wires 12 below the pulley 6 and are urged along by contact with driven pins 13.

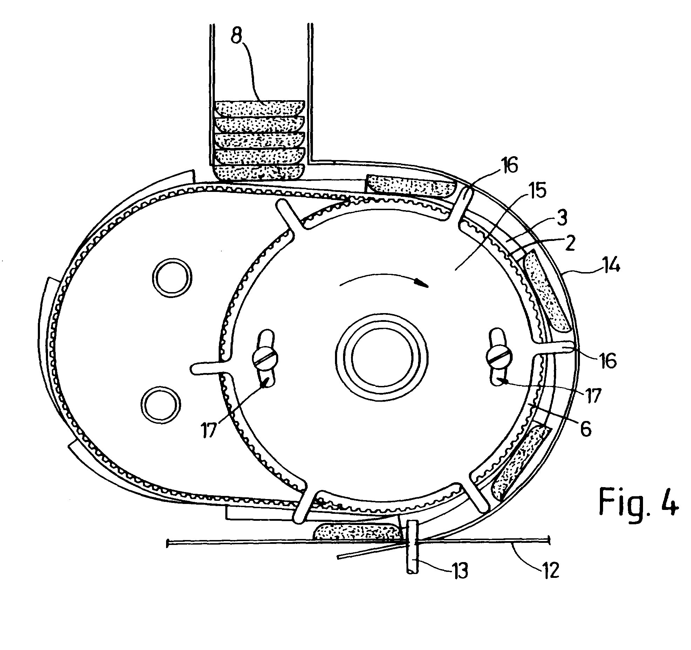

In Figure 4, a further embodiment of apparatus for removing articles from a stack includes the addition of a circular plate 15 mounted on the side of pulley 6. The plate 15 has fixed radially extending pins 16, the spacing of which is substantially equal to the spacing of the biscuits on the belt. As the biscuits travel around the pulley between the belt 2 and the retaining member 14, the biscuits are prevented from falling forwards and potentially jamming or breaking by the pins 16. Angular adjustment of the plate 15 on the pulley 6 may be achieved using a conventional slot and screw arrangement shown generally at 17. If a single pulley is used there is preferably a plate 15 mounted on each side of the pulley. If two pulleys are used there is preferably a plate 15 mounted on the outer surface of each of the two pulleys, with the belts extending between the plates 15.

Since the lowermost biscuit in the stack is removed downwardly, as well as horizontally, the stack as a whole maintains a constant downward motion which is not arrested at any time during the de-stacking process. Since the stack of biscuits is not undergoing a start-stop vibration there is less likelihood of damage to the biscuits.

It will be appreciated that the projections 3 are made sufficiently flexible to follow the path of the belt 2.

An advantage of using a belt as the conveying means is that the belt with its associated projections 3 can easily be changed when this is required to suit a different type of biscuit.

## Claims

1. Apparatus (1) for removing planar articles from a stack (8), the apparatus comprising conveying means and a number of projections (3) located on the conveying means, each projection (3) comprising a leading edge (4) which is substantially transverse to the extent of the conveying means and a trailing edge (5) which tapers towards the conveying means; said conveying means being adapted to be located in use substantially below a stack of articles (8) in stack retaining means (9), characterised in that the portion of the conveying means directly below the stack of articles (8) is angled downwardly with respect to the stack of articles (8); that in use the conveying means is arranged to convey a lowermost article (10) in the stack (8) downwardly with respect to the stack retaining means (9), and the stack of articles (8) descends at a constant speed relative to the speed of the conveying means.

2. Apparatus (1) for removing planar articles from a stack (8) according to claim 1, characterised in that in use the downward motion of the stack (8) is continuous.

3. Apparatus according to claim 1 or claim 2, characterised in that the stack of planar articles maintains a downward motion with respect to the stack retaining means (9).

4. Apparatus according to any one of claims 1 to 3, characterised in that the conveying means comprises an endless belt or track (2), which belt or track is driven by a pulley (6).

5. Apparatus according to any of claims 1 to 4, characterised in that the portion of the conveying means (2) directly below the stack is arranged to travel downwardly with respect to the stack retaining means (9) in the direction of travel of the conveying means.

6. Apparatus according to claim 5, characterised in that said portion of the conveying means (2) is substantially flat.

7. Apparatus according to claim 5 or claim 6, characterised in that the angle between the said portion of the conveying means and the horizontal extent of the stack is such that a lowermost planar article of the stack is removed and travels downwardly with respect to the stack retaining means (9) by a distance substantially equal to the thickness of a planar article.

8. Apparatus according to any of claims 1 to 7, characterised in that the or each projection comprises a blade member (3) having a leading edge (4) which is substantially transverse to the extent of the conveying means (2), and a trailing edge (5) which tapers towards the conveying means.

9. Apparatus according to claim 8, characterised in that the height above the conveying means of the leading edge of the projection is not greater than the thickness of a planar article.

10. Apparatus according to claim 8 or claim 9, characterised in that the trailing edge (5) of the projection (3) is arranged to support the next lowermost planar article (11) in the stack.

11. Apparatus according to any of claims 1 to 10, characterised in that the articles are urged on to guide means (12) arranged to guide the motion of the planar articles away from the stack.

12. Apparatus according to claim 11, characterised in that there is provided additional urging means (13) to urge the planar articles onto the guide means (12).

13. Apparatus according to claim 12, characterised in that the urging means comprise one or more pin members (13).

14. Apparatus according to any of claims 11 to 13, characterised in that the guide means comprises a number of wires (12) arranged to support planar articles (10) from below.

15. Apparatus according to any of claims 1 to 10, characterised in that the or each planar article is inverted after removal from the stack, by co-operation of the planar articles with a retaining member (14), which retaining member extends partly around a pulley (6) of the conveying means, and is spaced from the conveying means.

16. Apparatus according to claim 15, characterised in that the or each planar article is supported by one or more support members (16) which are fixed relative to the pulley, to support the or each planar article as it travels around the pulley.

17. Apparatus according to claim 16, characterised in that the support members comprise projections (16) fixed to the pulley.

18. Apparatus according to claim 17, characterised in that the fixed projections (16) are attached to or integral with a plate (15) mounted on the side of the pulley, such that the fixed projections extend radially outward with respect to the pulley.

19. Apparatus according to claim 18, characterised in that there are provided two plates located either side of the pulley of the conveying means.

20. Apparatus according to claim 17, characterised in that the fixed projections (16) are spaced apart by an extent substantially equal to the spacing of the planar articles on the conveying means (2).

21. Apparatus according to any of claims 1 to 20, characterised in that two conveying means are provided below the stack of planar articles, such that each conveying means supports the lowermost planar article as it is removed from the stack, there being one conveying means located substantially either side of a centre of a lowermost article.

22. Apparatus according to claim 21, characterised in that the motion of the two conveying means is synchronised such that projections (16) on the two conveying means arrive at the lowermost article at substantially the same time.

23. Apparatus according to any of claims 1 to 22, characterised in that there is provided a conveyor support means (7) arranged to support at least the portion of the conveying means (2) directly below the stack such that the said portion of the conveying means extends at an angle below horizontal.

24. Apparatus according to a claim 23, characterised in that the conveyor support means (7) is adjustable such that the angle below the horizontal at which the said portion of the conveying means extends may be adjusted.

25. Apparatus according to claim 24, characterised in that the conveyor support means (7) is adjustable pivotally with respect to a pulley (6) of the conveying means.

26. A method of removing planar articles (8) from a stack in a stack retaining means (9), the method comprising conveying the lowermost article (10) of the stack (8) away from the stack (8) on conveying means, characterised in that the conveying means is arranged to convey the lowermost article (10) in the stack (8) downwardly with respect to the stack retaining means (9) until the said article (10) is conveyed beyond a horizontal extent of the stack (8) and to descend the stack of articles (8) at a constant speed relative to the speed of the conveying means.

27. A method of removing planar articles (8) from a stack according to claim 26 characterised in that in use the downward movement of the stack (8) is continuous.

## Patentansprüche

1. Vorrichtung (1) zur Entnahme flächiger Gegenstände aus einem Stapel (8), welcher eine Fördereinrichtung und eine Anzahl Vorsprünge (3) aufweist, die sich auf der Fördereinrichtung befinden, wobei jeder Vorsprung (3) eine Vorderkante (4) aufweist, die im wesentlichen quer zur Erstreckung der Fördereinrichtung verläuft, sowie eine Hinterkante (5), welche zu der Fördereinrichtung hin konisch verläuft, wobei die Fördereinrichtung im Einsatz im wesentlichen unter einen Stapel Gegenstände (8) in einer Stapelhalteeinrichtung (9) positionierbar ist, dadurch gekennzeichnet, daß der Abschnitt der Fördereinrichtung, der sich direkt unter dem Stapel Gegenstände (8) befindet, bezogen auf den Stapel von Gegenständen (8), unter einem Winkel nach unten gerichtet ist, daß im Einsatz die Fördereinrichtung zum Fördern des untersten Gegenstands (10) im Stapel (8), bezogen auf die Stapelhalteeinrichtung (9), nach unten angeordnet ist, und daß sich der Stapel Gegenstände (8) mit einer relativ zur Geschwindigkeit der Fördereinrichtung mit konstanten Geschwindigkeit nach unten bewegt.

2. Vorrichtung (1) zur Entnahme flächiger Gegenstände aus einem Stapel (8) nach Anspruch 1, dadurch gekennzeichnet, daß im Einsatz die Abwärtsbewegung des Stapels (8) kontinuierlich verläuft.

3. Vorrichtung nach Anspruch 1 oder 2, dadurch gekennzeichnet, daß der Stapel flächiger Gegenstände, bezogen auf die Stapelhalteeinrichtung (9), eine Abwärtsbewegung beibehält.

4. Vorrichtung nach einem der Ansprüche 1 bis 3, dadurch gekennzeichnet, daß die Fördereinrichtung ein geschlossenes Band bzw. eine geschlossene Bahn (2) aufweist, welches bzw. welche von einer Scheibe bzw. Trommel angetrieben wird.

5. Vorrichtung nach einem der Ansprüche 1 bis 4, dadurch gekennzeichnet, daß der Abschnitt der Fördereinrichtung (2), der sich direkt unter dem Stapel befindet, so angeordnet ist, daß er sich, bezogen auf die Stapelhalteeinrichtung (9), in der Transportrichtung der Fördereinrichtung nach unten bewegt.

6. Vorrichtung nach Anspruch 5, dadurch gekennzeichnet, daß der Abschnitt der Fördereinrichtung (2) im wesentlichen flächig ist.

7. Vorrichtung nach Anspruch 5 oder 6, dadurch gekennzeichnet, daß der Winkel zwischen dem Abschnitt der Fördereinrichtung und der horizontalen Erstreckung des Stapels so gehalten ist, daß ein unterster flächiger Gegenstand im Stapel entnommen wird und sich, bezogen auf die Stapelhalteeinrichtung (9), um einen Abstand nach unten bewegt, der im wesentlichen gleich der Dicke eines flächigen Gegenstands ist.

8. Vorrichtung nach einem der Ansprüche 1 bis 7, dadurch gekennzeichnet, daß der bzw. jede Vorsprung ein Klingenteil (3) mit einer Vorderkante (4) aufweist, die im wesentlichen quer zur Erstreckung der Fördereinrichtung (2) quer verläuft, sowie eine Hinterkante (5), welche zur Fördereinrichtung hin konisch zuläuft.

9. Vorrichtung nach Anspruch 8, dadurch gekennzeichnet, daß die Höhe der Vorderkante des Vorsprungs über der Fördereinrichtung nicht größer ist als die Dicke eines flächigen Gegenstands.

10. Vorrichtung nach Anspruch 5 oder 6, dadurch gekennzeichnet, daß die Hinterkante (5) des Vorsprungs (3) so angeordnet ist, daß sie den nächsten untersten flächigen Gegenstand (11) im Stapel abstützt.

11. Vorrichtung nach einem der Ansprüche 1 bis 10, dadurch gekennzeichnet, daß die Gegenstände zu einer Führungseinrichtung (12) hin gespannt werden, welche zum Führen der flächigen Gegenstände in ihrer Bewegung vom Stapel weg angeordnet ist.

12. Vorrichtung nach Anspruch 11, dadurch gekennzeichnet, daß eine zusätzliche Spanneinrichtung (13) zum Spannen der flächigen Gegenstände auf die Führungseinrichtung (12) vorgesehen ist.

13. Vorrichtung nach Anspruch 12, dadurch gekennzeichnet, daß die Spanneinrichtung ein oder mehrere Stiftteile (13) aufweist.

14. Vorrichtung nach einem der Ansprüche 11 bis 13, dadurch gekennzeichnet, daß die Führungseinrichtung eine Anzahl von Drähten (12) aufweist, die zum Abstützen flächiger Gegenstände (10) von unten angeordnet ist.

15. Vorrichtung nach einem der Ansprüche 1 bis 10, dadurch gekennzeichnet, daß der bzw. jeder flächige Gegenstand nach der Entnahme aus dem Stapel durch Zusammenwirken der flächigen Gegenstände mit einem Halteteil (14) umgekehrt wird, welches sich teilweise um eine Scheibe (6) bzw. Trommel der Fördereinrichtung erstreckt und im Abstand von der Fördereinrichtung angeordnet ist.

16. Vorrichtung nach Anspruch 15, dadurch gekennzeichnet, daß der bzw. jeder flächige Gegenstand von einem oder mehreren Stützteilen (16) abgestützt wird, welche relativ zur Scheibe bzw. Trommel so befestigt sind, daß sie den bzw. jeden flächigen Gegenstand auf seinem Weg um die Scheibe bzw. Trommel abstützen.

17. Vorrichtung nach Anspruch 16, dadurch gekennzeichnet, daß die Stützteile Vorsprünge (16) aufweisen, welche an der Scheibe bzw. Trommel befestigt sind.

18. Vorrichtung nach Anspruch 17, dadurch gekennzeichnet, daß die befestigten Vorsprünge (16) an einer Platte (15) angesetzt bzw. einteilig mit dieser ausgebildet sind, welche auf der Seite der Scheibe bzw. Trommel so angebracht ist, daß sich die befestigten Vorsprünge, bezogen auf die Scheibe bzw. Trommel, radial nach außen erstrecken.

19. Vorrichtung nach Anspruch 18, dadurch gekennzeichnet, daß zwei Platten vorgesehen sind, welche auf beiden Seite der Scheibe bzw. Trommel der Fördereinrichtung angeordnet sind.

20. Vorrichtung nach Anspruch 17, dadurch gekennzeichnet, daß die befestigten Vorsprünge (16) um einen Abstand voneinander beabstandet sind, der im wesentlichen gleich dem Abstand zwischen den flächigen Gegenständen auf der Fördereinrichtung (2) ist.

21. Vorrichtung nach einem der Ansprüche 1 bis 20, dadurch gekennzeichnet, daß unter dem Stapel flächiger Gegenstände zwei Fördereinrichtungen so vorgesehen sind, daß jede Fördereinrichtung den untersten flächigen Gegenstand bei dessen Entnahme aus dem Stapel abstützt, wobei sich eine Fördereinrichtung im wesentlichen zu beiden Seiten eines Mittelpunkts eines untersten Gegenstands befindet.

22. Vorrichtung nach Anspruch 21, dadurch gekennzeichnet, daß die Bewegungen der beiden Fördereinrichtungen so synchronisiert sind, daß Vorsprünge (16) auf den beiden Fördereinrichtungen im wesentlichen gleichzeitig am untersten Gegenstand ankommen.

23. Vorrichtung nach einem der Ansprüche 1 bis 22, dadurch gekennzeichnet, daß eine Förderer-Abstützeinrichtung (7) vorgesehen ist, welche so angeordnet ist, daß sie zumindest den Abschnitt der Fördereinrichtung (2), der sich direkt unter dem Stapel befindet, so abstützt, daß der Abschnitt der Fördereinrichtung sich unter einem Winkel unter der Horizontalen erstreckt.

24. Vorrichtung nach Anspruch 23, dadurch gekennzeichnet, daß die Förderer-Abstützeinrichtung (7) so einstellbar ist, daß der Winkel unter der Horizontalen, unter dem der Abschnitt der Fördereinrichtung verläuft, einstellbar ist.

25. Vorrichtung nach Anspruch 24, dadurch gekennzeichnet, daß die Förderer-Abstützeinrichtung (7) bezüglich einer Scheibe (6) bzw. Trommel der Fördereinrichtung drehbar einstellbar ist.

26. Verfahren zum Entnehmen flächiger Gegenstände (8) aus einem Stapel in einer Stapelhalteeinrichtung (9), welches den Schritt umfaßt, daß der unterste Gegenstand (10) in dem Stapel (8) auf einer Fördereinrichtung vom Stapel (8) weg befördert wird, dadurch gekennzeichnet, daß die Fördereinrichtung so angeordnet ist, daß sie den untersten Gegenstand (10) im Stapel (8), bezogen auf die Stapelhalteeinrichtung (9), nach unten befördert, bis der Gegenstand (10) über eine horizontale Erstreckung des Stapels (8) hinaus gefördert wird, und daß der Stapel Gegenstände (8) mit einer relativ zur Geschwindigkeit der Fördereinrichtung konstanten Geschwindigkeit nach unten bewegt wird.

27. Verfahren zum Entnehmen flächiger Gegenstände (8) aus einem Stapel in einer Stapelhalteeinrichtung (9), dadurch gekennzeichnet, daß im Einsatz die Abwärtsbewegung des Stapels (8) kontinuierlich verläuft.

## Revendications

1. Dispositif (1) destiné à enlever des articles plans d'une pile (8), le dispositif comprenant un moyen de transport et une pluralité de saillies (3) situées sur le moyen de transport, chaque saillie (3) comprenant un bord avant (4) qui est pratiquement transversal à l'étendue du moyen de transport et un bord arrière (5) qui s'amincit vers le moyen de transport ; ledit moyen de transport étant conçu pour être situé en utilisation pratiquement en dessous d'une pile d'articles (8) dans un moyen de retenue de pile (9), caractérisé en ce que la partie du moyen de transport directement en dessous de la pile d'articles (8) fait un angle vers le bas par rapport à la pile d'articles (8) ; en ce qu'en utilisation le moyen de transport est agencé pour transporter un article le plus bas (10) dans la pile (8) vers le bas par rapport au moyen de retenue de pile (9), et la pile d'articles (8) descend à vitesse constante par rapport à la vitesse du moyen de transport.

2. Dispositif (1) destiné à enlever des articles plans d'une pile (8) selon la revendication 1, caractérisé en ce qu'en utilisation le déplacement vers le bas de la pile (8) est continu.

3. Dispositif selon la revendication 1 ou la revendication 2, caractérisé en ce que la pile d'articles plans maintient un mouvement vers le bas par rapport au moyen de retenue de pile (9).

4. Dispositif selon l'une quelconque des revendications 1 à 3, caractérisé en ce que le moyen de transport comprend un chemin ou une bande sans fin (2), lequel chemin ou bande sans fin est entraînée par une poulie (6).

5. Dispositif selon l'une quelconque des revendications 1 à 4, caractérisé en ce que la partie du moyen de transport (2) directement en dessous de la pile est agencée pour se déplacer vers le bas par rapport au moyen de retenue de pile (9) dans la direction de déplacement du moyen de transport.

6. Dispositif selon la revendication 5, caractérisé en ce que ladite partie du moyen de transport (2) est pratiquement plate.

7. Dispositif selon la revendication 5 ou la revendication 6, caractérisé en ce que l'angle entre ladite partie du moyen de transport et l'étendue horizontale de la pile est tel qu'un article plan le plus bas de la pile est enlevé et se déplace vers le bas par rapport au moyen de retenue de pile (9) sur une distance pratiquement égale à l'épaisseur d'un article plan.

8. Dispositif selon l'une quelconque des revendications 1 à 7, caractérisé en ce que la saillie ou chaque saillie comprend un élément de lame (3) comportant un bord avant (4) qui est pratiquement transversal à l'étendue du moyen de transport (2), et un bord arrière (5) qui s'amincit vers le moyen de transport.

9. Dispositif selon la revendication 8, caractérisé en ce que la hauteur au-dessus du moyen de transport du bord avant de la saillie n'est pas supérieure à l'épaisseur d'un article plan.

10. Dispositif selon la revendication 8 ou la revendication 9, caractérisé en ce que le bord arrière (5) de la saillie (3) est agencé pour supporter l'article plan suivant le plus bas (11) dans la pile.

11. Dispositif selon l'une quelconque des revendications 1 à 10, caractérisé en ce que les articles sont sollicités vers un moyen de guidage (12) agencé pour guider le déplacement des articles plans à l'écart de la pile.

12. Dispositif selon la revendication 11, caractérisé en ce qu'il est prévu un moyen de sollicitation supplémentaire (13) afin de solliciter les articles plans jusque sur le moyen de guidage (12).

13. Dispositif selon la revendication 12, caractérisé en ce que le moyen de sollicitation comprend un ou plusieurs éléments de broches (13).

14. Dispositif selon l'une quelconque des revendications 11 à 13, caractérisé en ce que le moyen de guidage comprend un certain nombre de fils (12) agencés pour supporter les articles plans (10) par le dessous.

15. Dispositif selon l'une quelconque des revendications 1 à 10, caractérisé en ce que l'article ou chaque article plan est inversé après enlèvement de la pile, par coopération des articles plans avec un élément de retenue (14), lequel élément de retenue s'étend partiellement autour d'une poulie (6) du moyen de transport, et est espacé par rapport au moyen de transport.

16. Dispositif selon la revendication 15, caractérisé en ce que l'article ou chaque article plan est supporté par un ou plusieurs éléments de support (16) qui sont fixes relativement à la poulie, pour supporter l'article ou chaque article plan lorsqu'il se déplace autour de la poulie.

17. Dispositif selon la revendication 16, caractérisé en ce que les éléments de support comprennent des saillies (16) fixées à la poulie.

18. Dispositif selon la revendication 17, caractérisé en ce que les saillies fixes (16) sont fixées à une plaque (15), ou intégrées à celle-ci, montée sur le côté de la poulie, de sorte que les saillies fixes s'étendent radialement vers l'extérieur par rapport à la poulie.

19. Dispositif selon la revendication 18, caractérisé en ce que sont prévues deux plaques situées de chaque côté de la poulie du moyen de transport.

20. Dispositif selon la revendication 17, caractérisé en ce que les saillies fixes (16) sont espacées sur une étendue pratiquement égale à l'espacement des articles plans sur le moyen de transport (2).

21. Dispositif selon l'une quelconque des revendications 1 à 20, caractérisé en ce que deux moyens de transport sont prévus en dessous de la pile des articles plans, de sorte que chaque moyen de transport supporte l'article plan le plus bas lorsqu'il est retiré de la pile, un moyen de transport étant situé sensiblement de chaque côté d'un centre d'un article le plus bas.

22. Dispositif selon la revendication 21, caractérisé en ce que le déplacement des deux moyens de transport est synchronisé de sorte que des saillies (16) sur les deux moyens de transport arrivent au niveau de l'article le plus bas pratiquement en même temps.

23. Dispositif selon l'une quelconque des revendications 1 à 22, caractérisé en ce qu'il est prévu un moyen de support de transporteur (7) agencé pour supporter au moins la partie du moyen de transport (2) directement en dessous de la pile de telle manière que ladite partie du moyen de transport s'étende suivant un angle en dessous de l'horizontale.

24. Dispositif selon la revendication 23, caractérisé en ce que le moyen de support de transporteur (7) est ajustable de telle sorte que l'angle en dessous de l'horizontale suivant lequel ladite partie du moyen de transport s'étend, peut être ajusté.

25. Dispositif selon la revendication 24, caractérisé en ce que le moyen de support de transporteur (7) est ajustable en pivotement par rapport à une poulie (6) du moyen de transport.

26. Procédé d'enlèvement d'articles plans (8) d'une pile dans un moyen de retenue de pile (9), le procédé comprenant le transport de l'article le plus bas (10) de la pile (8) à l'écart de la pile (8) sur un moyen de transport, caractérisé en ce que le moyen de transport est agencé pour transporter l'article le plus bas (10) dans la pile (8) vers le bas par rapport au moyen de retenue de pile (9) jusqu'à ce que ledit article (10) soit transporté au-delà d'une étendue horizontale de la pile (8) et pour faire descendre la pile d'articles (8) à une vitesse constante par rapport à la vitesse du moyen de transport.

27. Procédé d'enlèvement d'articles plans (8) d'une pile selon la revendication 26, caractérisé en ce qu'en utilisation le déplacement vers le bas de la pile (8) est continu.
